# EUROPEAN PATENT APPLICATION

(11) **EP 4 429 337 A1**
(43) Date of publication of application: **11.09.2024**
(21) Application number: 21962973.0
(22) Date of filing: 05.11.2021
(51) Int. Cl.: H04W 56/00, H04W 84/06

(54) **INFORMATION TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2021/129102
(87) International publication number: WO 2023/077460

(57) **Abstract**

Embodiments of the present disclosure relate to an information transmission method and apparatus, a communication device, and a storage medium. An access network device sends first information, wherein the first information is used for indicating satellite ephemeris and/or a timing advance (TA)/common TA parameter corresponding to a predetermined cell, the common TA parameter is used for user equipment (UE) to determine common TA of the predetermined cell, and the predetermined cell at least comprises a secondary cell and/or a target cell switched by the UE.

## Description

### TECHNICAL FIELD

The disclosure relates to, but is not limited to, the field of wireless communication technology, in particular to a method and an apparatus for transmitting information, a communication device and a storage medium.

### BACKGROUND

Non-terrestrial networks (NTN) are introduced into a 5th generation (5G) cellular mobile communication system. In an NTN system, signal coverage is provided by a satellite, and due to a relative motion between a satellite and a user equipment (UE), doppler frequency shift and signal transmission delay between the satellite and the UE are caused. The UE needs to know the position and the motion information related to the satellite, to compensate for a transmission delay and/or a frequency offset from the UE to the satellite.

### SUMMARY

In view of this, the disclosure provides a method and an apparatus for transmitting information, a communication device and a storage medium.

According to a first aspect of embodiments of the disclosure, a method for transmitting information is provided. The method is applied to an access network device and includes:
sending first information, in which the first information is configured to indicate a satellite ephemeris and/or common timing advance (TA) parameter(s) corresponding to a predetermined cell, and the common TA parameter(s) is/are configured to be used for a user equipment (UE) to determine a common TA of the predetermined cell; the predetermined cell at least includes: a secondary cell and/or a target cell for handover of the UE.

In an embodiment, the first information is for the predetermined cell;
or,
the first information is for a cell group to which the predetermined cell belongs, in which cells in a same cell group are determined by a same satellite;
   or,
the first information is for a TA group to which the predetermined cell belongs, in which cells in a same TA group are determined by a same satellite.

In an embodiment, sending the first information includes:
sending a downlink message including the first information in response to meeting a preset condition.

In an embodiment, sending the downlink message including the first information in response to meeting the preset condition includes at least one of:
sending the downlink message including the first information to the UE in response to the UE being configured with at least one predetermined cell;
sending the downlink message including the first information in response to a current radio access technology (RAT) type being Non-terrestrial network (NTN);
sending the downlink message including the first information in response to the predetermined cell being determined by a satellite;
sending the downlink message including the first information in response to determining that a satellite of the predetermined cell is a non-geostationary orbiting (NGSO) satellite; or
sending the downlink message including the first information to the UE in response to the UE switching between predetermined cells.

In an embodiment, sending the first information includes:
sending the first information in response to there being an uplink channel configuration for the predetermined cell.

In an embodiment, the first information is further configured to indicate a valid time of the satellite ephemeris, and/or a valid time of the common TA.

In an embodiment, sending the first information includes:
sending the first information within a valid time of the satellite ephemeris and/or a valid time of the common TA parameter(s) corresponding to the predetermined cell.

In an embodiment, sending the first information includes:
sending a radio resource control (RRC) message including the first information.

In an embodiment, sending the RRC message including the first information includes:
sending the RRC message including the first information based on an update requirement of the UE.

According to a second aspect of embodiments of the disclosure, a method for transmitting information is provided. The method is applied to a UE and includes:
receiving first information, in which the first information is configured to indicate a satellite ephemeris and/or common TA parameter(s) corresponding to a predetermined cell, the common TA parameter(s) is/are configured to be used for the UE to determine a common TA of the predetermined cell; and the predetermined cell at least includes: a secondary cell and/or a target cell for handover of the UE.

In an embodiment, the first information is for the predetermined cell;
or,
the first information is for a cell group to which the predetermined cell belongs, in which cells in a same cell group are determined by a same satellite;
   or,
the first information is for a TA group to which the predetermined cell belongs, in which cells in a same TA group are determined by a same satellite.

In an embodiment, the first information is further configured to indicate a valid time of the satellite ephemeris, and/or a valid time of the common TA parameter(s)

In an embodiment, receiving the first information includes:
receiving the first information within a valid time of the satellite ephemeris and/or a valid time of the common TA parameter(s) corresponding to the predetermined cell.

In an embodiment, receiving the first information includes:
receiving an RRC message including the first information.

In an embodiment, receiving the RRC message including the first information includes:
receiving the RRC message including the first information based on an update requirement of the UE.

According to a third aspect of embodiments of the disclosure, an apparatus for transmitting information is provided. The apparatus is applied to an access network device and includes:
a sending module, configured to send first information, in which the first information is configured to indicate a satellite ephemeris and/or common TA parameter(s) corresponding to a predetermined cell, the common TA parameter(s) is/are configured to be used for a UE to determine a common TA of the predetermined cell; and the predetermined cell at least includes: a secondary cell and/or a target cell for handover of the UE.

In an embodiment, the first information is for the predetermined cell;
or,
the first information is for a cell group to which the predetermined cell belongs, in which cells in a same cell group are determined by a same satellite;
   or,
the first information is for a TA group to which the predetermined cell belongs, in which cells in a same TA group are determined by a same satellite.

In an embodiment, the sending module is configured to:
send a downlink message including the first information in response to meeting a preset condition.

In an embodiment, the sending module is configured to perform at least one of:
sending the downlink message including the first information to the UE in response to the UE being configured with at least one predetermined cell;
sending the downlink message including the first information in response to an RAT type being NTN;
sending the downlink message including the first information in response to the predetermined cell being determined by a satellite;
sending the downlink message including the first information in response to determining that a satellite of the predetermined cell is a NGSO satellite; or
sending the downlink message including the first information to the UE in response to the UE switching between predetermined cells.

In an embodiment, the sending module is configured to:
send the first information in response to there being an uplink channel configuration for the predetermined cell.

In an embodiment, the first information is further configured to indicate a valid time of the satellite ephemeris, and/or a valid time of the common TA.

In an embodiment, the sending module is configured to:
send the first information within a valid time of the satellite ephemeris and/or within a valid time of the common TA parameter(s) corresponding to the predetermined cell.

In an embodiment, the sending module is configured to:
send an RRC message including the first information.

In an embodiment, the sending module is configured to:
send the RRC message including the first information based on an update requirement of the UE.

According to a fourth aspect of embodiments of the disclosure, an apparatus for transmitting information is provided. The apparatus is applied to a UE and includes:
a receiving module, configured to receive first information, in which the first information is configured to indicate a satellite ephemeris and/or common TA parameter(s) corresponding to a predetermined cell, the common TA parameter(s) is/are configured to be used for the UE to determine a common TA of the predetermined cell; and the predetermined cell at least includes: a secondary cell and/or a target cell for handover of the UE.

In an embodiment, the first information is for the predetermined cell;
or,
the first information is for a cell group to which the predetermined cell belongs, in which cells in a same cell group are determined by a same satellite;
   or,
the first information is for a TA group to which the predetermined cell belongs, in which cells in a same TA group are determined by a same satellite.

In an embodiment, the first information is further configured to indicate a valid time of the satellite ephemeris, and/or a valid time of the common TA parameter(s)

In an embodiment, the receiving module is configured to:
receive the first information within a valid time of the satellite ephemeris and/or a valid time of the common TA parameter(s) corresponding to the predetermined cell.

In an embodiment, the receiving module is configured to:
receive an RRC message including the first information.

In an embodiment, the receiving module is configured to:
receive the RRC message including the first information based on an update requirement of the UE.

According to a fifth aspect of embodiments of the disclosure, a communication device is provided, including a processor, a memory and an executable program stored in the memory and executable by the processor. The executable program, when executed by the processor, causes the processor to perform the method for transmitting information according to the first aspect or the second aspect.

According to a sixth aspect of embodiments of the disclosure, a storage medium with an executable program stored thereon is provided, in which the executable program, when executed by a processor, causes the processor to perform the method for transmitting information according to the first aspect or the second aspect.

With the methods and the apparatuses for transmitting information, the communication device, and the storage medium according to embodiments of the disclosure, the access network device sends first information, in which the first information is configured to indicate a satellite ephemeris and/or common TA parameter(s) corresponding to a predetermined cell, the common TA parameter(s) is/are configured to be used for a UE to determine a common TA of the predetermined cell and the predetermined cell at least includes: a secondary cell and/or a target cell for handover of the UE. In this way, the access network device indicates the ephemeris information and/or the common TA parameter(s) of the predetermined cell to the UE by sending the first information, so that the UE may determine the transmission delay and/or the frequency offset of the predetermined cell, which meets the requirement that the UE determines the transmission delay and/or frequency offset of each cell in a multi-satellite cell coverage scenario, reduces the occurrence of uplink out-of-synchronization of the UE, and improves a reliability of performing, by the UE, wireless communication in the NTN network.

It is understandable that the above general descriptions and following detailed descriptions are only illustrative and descriptive, and may not be a limitation in embodiments of the disclosure.

### BRIEF DESCRIPTION OF THE DRAWINGS

The drawings herein are incorporated into the specification and constitute a part of the specification, show embodiments in conformity with embodiments of the disclosure, and explain the principle in embodiments of the disclosure together with the specification.
FIG. 1 is a diagram illustrating a structure of a wireless communication system according to an embodiment.
FIG. 2 is a flowchart illustrating a method for transmitting information according to an embodiment.
FIG. 3 is a diagram illustrating a structure of an NTN network according to an embodiment.
FIG. 4 is a flowchart illustrating a method for transmitting information according to another embodiment.
FIG. 5 is a block diagram illustrating an apparatus for transmitting information according to an embodiment.
FIG. 6 is a block diagram illustrating an apparatus for transmitting information according to another embodiment.
FIG. 7 is a block diagram illustrating a device for transmitting information according to an embodiment.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all the implementations consistent with the disclosure. Rather, they are merely examples of the apparatus and method consistent with some aspects of the disclosure as detailed in the appended claims.

The terms described in the disclosure are only for the purpose of describing specific embodiments and are not intended to limit embodiments of the disclosure. The singular forms "a", "the" and "said" used in embodiments of the disclosure and the attached claim are also intended to include plural forms, unless the context clearly indicates otherwise. It is understandable that the term "and/or" used in the disclosure means and includes any or all possible combinations of one or more associated listed items.

It is understandable that, although the terms first, second, third, etc. may be used in embodiments of the disclosure to describe various information, such information shall not be limited to these terms. These terms are only used to distinguish the same type of information. For example, subject to the scope of this disclosure, first information may also be referred to as second information, and similarly, and second information may also be referred to as first information. It depends on the context. For example, the word "if" as used herein may be interpreted as "in a case that" or "when" or "in response to determination".

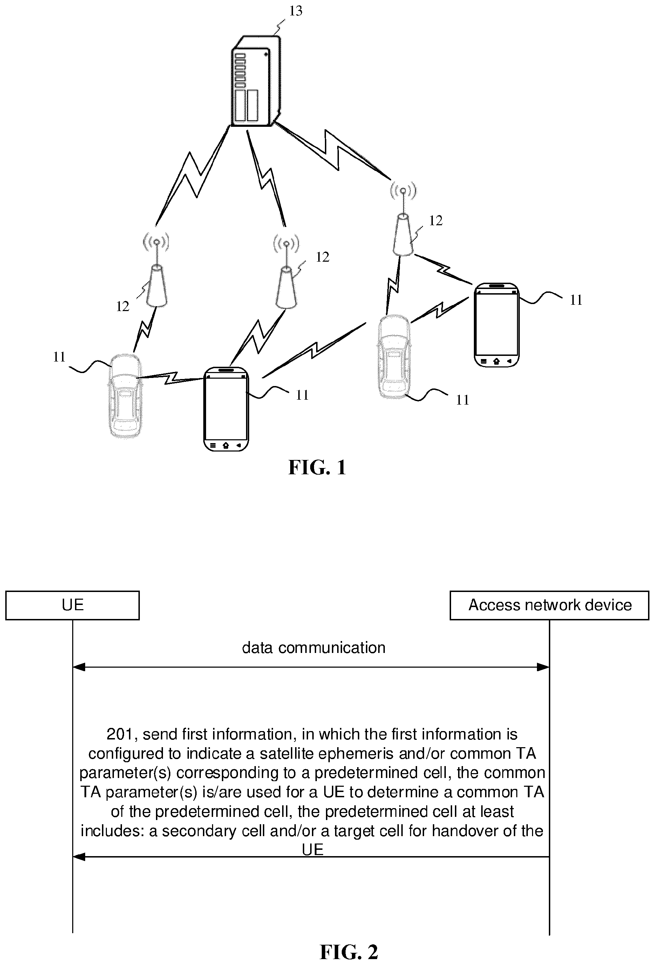

FIG. 1 is a diagram illustrating a wireless communication system according to embodiments of the disclosure. As illustrated in FIG. 1, the wireless communication system is a communication system based on a cellular mobile communication technology. The wireless communication system may include several terminals 11 and several base stations 12.

The terminal 11 may refer to a device that provides voice and/or data connectivity for the user. The terminal 11 may communicate with one or more core networks through a radio access network (RAN). The terminal 11 may be an internet of things terminal, for example, a sensor device, a mobile phone (or referred to as a cellular phone) and a computer having an internet of things terminal, for example, may be a fixed, portable, compact, handheld, computer built-in or vehicle-mounted apparatus. For example, a station (STA), a subscriber unit, a subscriber station, a mobile station, a mobile, a remote station, an access point, a remote terminal, an access terminal, a user terminal, a user agent, a user device or a user equipment (UE). Or, the terminal 11 may be a device of an unmanned vehicle, a vehicle device, Or, the terminal 11 may be a vehicle-mounted device, for example, may be a driving computer with a wireless communication function, or a wireless communication device externally connected to a driving computer. Or, the terminal 11 may be a roadside device, for example, may be a street lamp with the wireless communication function, a signal light or other roadside devices, etc.

A base station 12 may be a network side device in the wireless communication system. The wireless communication system may be a 4th generation mobile communication (4G) system, also referred to as a long term evolution (LTE) system; or the wireless communication system may be a 5G system, also referred to as a new radio (NR) system or a 5G NR system. Or, the wireless communication system may be a next generation system of the 5G system. An access network in a 5G system may be referred to as a new generation-radio access network (NG-RAN). Or, a MTC system.

The base station 12 may be an eNB adopted in 4G system. Or, the base station 12 may be a base station (gNB) with a centralized distributed architecture in the 5G system. When the base station 12 adopts the centralized distributed architecture, the base station 120 generally includes a central unit (CU) and at least two distributed units (DU). Protocol stacks at a packet data convergence protocol (PDCP) layer, a radio link control (RLC) layer and a media access control (MAC) layer are configured in the CU; a physical (PHY) layer protocol is configured in the DU. The specific implementation of the base station 12 is not limited in the embodiments of the disclosure.

The base station 12 may establish a wireless connection with the terminal 11 through a wireless air interface. In different implementations, the wireless radio interface is a wireless radio interface based on a 4G standard; or, the wireless radio interface is a wireless radio interface based on a 5G standard. For example, the wireless radio interface is a new radio interface; or, the wireless radio interface may be a wireless radio interface based on a next generation mobile communication network technology standard of the 5G.

In some embodiments, E2E (end to end) connection can also be established between the terminals 11. For example, vehicle to vehicle (V2V) communication, vehicle to infrastructure roadside equipment (V2I) communication, vehicle to person (V2P) communication and the like scenes in vehicle to everything (V2X).

In some embodiments, the wireless communication system may further include a network management device 13.

Several base stations 12 are connected with a network management device 13 respectively. The network management device 13 may be a core network device in the wireless communication system, for example, the network management device 13 may be a mobility management entity (MME) in an evolved packet core (EPC). Or, the network management device may be other core network devices, for example, a serving gateway (SGW), a public data network gateway (PGW), a policy and charging rules function (PCRF) or a home subscriber server (HSS), and the like. The implementation of the network management device 13 is not limited in the embodiments of the present disclosure.

The execution subject involved in embodiments of the disclosure includes, but is not limited to, a UE in an NTN network, a network side device or a core network. The UE is for example a mobile phone terminal. The network side device is for example an access network device, such as a satellite or a base station.

A predetermined cell may be a cell formed by a coverage of a satellite signal in the NTN network. There may be one or more predetermined cells.

Payload types in the NTN network may include a regenerative payload type and a transparent payload type. For the former, the satellite has a capability of data processing and regeneration. For example, there is a base station located on the satellite or a gNB-DU located on the satellite. For the latter, the satellite does not process a received signal and only completes a frequency conversion function and/or a signal amplification function, and the processing and generation of a signal are completed by the base station and/or a ground station located on the ground. Cells generated by the satellite and the RAT type being NTN mentioned in the disclosure are applicable to both the regenerative satellite and the transparent satellite.

Cells in the NTN network may be formed by a coverage of the satellite beam in the NTN network. That is, cells are determined by the satellite.

The UE needs to know ephemeris information of the satellite to compensate for a transmission latency and/or a frequency offset from the UE to a satellite side. The ephemeris information of the satellite may be sent by the base station to the UE. The ephemeris information of the satellite may be location and speed information of the satellite, or may be a semi-major axis, an ascending node, an orbital inclination, or the like.

The UE needs to know the transmission delay from the satellite to a reference point. The transmission delay is the same for all UEs in the cell such that this transmission delay is referred to as a common timing advance (common TA). The base station may send common TA parameter(s) to the UE, and the UE may determine the common TA based on the common TA parameter(s) Here, the reference point may be a point known to a base station or other base stations on the ground. If the reference point is located on the satellite, it may be considered that the common TA = 0.

In order to improve a communication rate of the satellite, a carrier aggregation (CA) manner and/or a dual-connectivity (DC) manner may be used to improve the communication rate. In the process of using the CA manner and/or the DC manner, the UE may be covered and served by more than one satellite. Each satellite may have a respective transmission delay and/or a respective frequency offset. Therefore, how the UE obtains related information for determining the transmission delay and/or the frequency offset between each satellite and the UE, thereby compensating for the transmission delay and/or the frequency offset of each satellite and reducing uplink out-of-synchronization of the UE is an urgent problem to be solved.

As illustrated in FIG. 2, a method for transmitting information according to embodiments is performed. The method may be applied to an access network device. The method includes the following.

At step 201, first information is sent, in which the first information is configured to indicate a satellite ephemeris and/or common TA parameter(s) corresponding to a predetermined cell, the common TA parameter(s) is/are configured to be used for a UE to determine a common TA of the predetermined cell; and the predetermined cell at least includes a secondary cell and/or a target cell for handover of the UE.

The access network device includes, but is not limited to, an NTN network access device, such as a satellite or a base station. The UE may be a mobile phone terminal that may perform wireless communication using a cellular mobile communication network technology.

The method according to embodiments of the disclosure may be applied to, but is not limited to, an NTN cellular mobile communication system.

Ephemeris information of the satellite may be position and speed information of the satellite, or may be a semi-major axis, an ascending node, or an orbital inclination. The UE may determine the transmission delay and/or the frequency offset between the satellite and the UE based on the location and speed information of the satellite, a location of the UE, or the like.

The common TA may be the transmission delay from the satellite to the reference point. The UE may determine the transmission delay from the satellite to the reference point based on the common TA parameter(s). The reference point may be a base station or other known points located on the ground. The UE may determine the transmission delay between the satellite and the UE based on the common TA, its own location, and a location of the reference point.

The common TA parameter(s) may include: a common TA, a change rate of the common TA, and/or a second-order change rate of the common TA, etc. The UE may determine the common TA based on the common TA parameter(s).

The predetermined cell may be a cell formed by a coverage of a satellite signal in the NTN network. There may be one or more predetermined cells.

The predetermined cell may include a serving cell or a target cell for handover of the UE. The serving cell may include a primary cell and a secondary cell. The primary cell and the secondary cell may be generated by different satellites. The serving cell and the target cell may also be generated by different satellites.

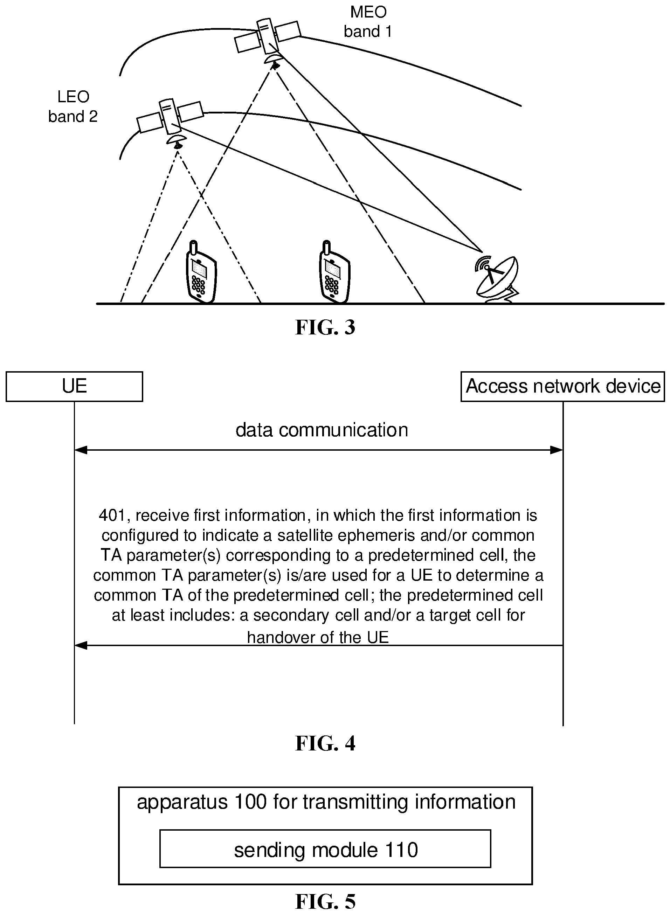

The primary cell is a cell operating on a primary frequency of the UE, in which the UE performs an initial connection establishment procedure or initiates a connection re-establishment procedure or a cell indicated as the primary cell in a handover procedure. The secondary cell is a cell operating on a secondary frequency of the UE, which may be configured once an RRC connection is established and which may be used to provide additional radio resources. As illustrated in FIG. 3, in a CA manner, the UE may be covered by signals of two satellites at the same time. The primary cell may be provided by one satellite, and the secondary cell may be provided by another satellite.

Based on the first information, the UE may obtain the ephemeris information and/or the common TA parameter(s) of the serving cell to determine a transmission delay and/or a frequency offset of the serving cell.

When switching to the target cell, the UE needs to determine the transmission delay and/or the frequency offset of the target cell. The base station may send the first information indicating ephemeris information and/or the common TA parameter(s) of the target cell to the UE by using the satellite. Based on the first information, the UE may obtain the ephemeris information and/or the common TA parameter(s) of the target cell to determine the transmission delay and/or the frequency offset of the target cell.

In this way, the access network device indicates the ephemeris information and/or the common TA parameter(s) of the predetermined cell to the UE by sending the first information, so that the UE may determine the transmission delay and/or the frequency offset of the predetermined cell, which meets the requirement that the UE determines the transmission delay and/or frequency offset of each cell in a multi-satellite cell coverage scenario, reduces the case of uplink out-of-synchronization of the UE, and improves a reliability of the UE performing wireless communication in the NTN network.

In an embodiment, sending the first information includes: sending a radio resource control (RRC) message including the first information.

The first information may be carried in an RRC message and sent to the UE. For example, the first information may be carried in a dedicated RRC message, such as an RRC reconfiguration message.

In an embodiment, the first information is for the predetermined cell.

For example, the first information may be for one predetermined cell, for example, the first information may be for a secondary cell. The UE may determine the satellite ephemeris and/or the common TA parameter(s) of the secondary cell based on the first information.

In an embodiment, the first information is for a cell group to which the predetermined cell belongs. Cells in a same cell group are determined by a same satellite.

Here, the cell group may include, but is not limited to, a master cell group (MCG), a secondary cell group (SCG), or the like.

For example, the first information may be for the secondary cell group, and the UE may determine the satellite ephemeris and/or the common TA parameter(s) of each secondary cell in the secondary cell group based on the first information forthe secondary cell group. The secondary cells in the secondary cell group may belong to a same satellite. Therefore, each secondary cell may share the same satellite ephemeris and/or the same common TA parameter(s)

In an embodiment, the first information is for a timing advance group (TAG) to which the predetermined cell belongs. Cells in the same TA group are determined by the same satellite.

One TAG may include one or more cells, and TAs of the cells in a same TAG may be the same. The TAG may include, but is not limited to, a secondary timing advance group (sTAG) consisting of secondary cells, a primary timing advance group (pTAG) consisting of primary cells, or the like.

For example, the TAG includes the secondary cell(s) of the UE, when the UE receives the first information for the TAG, the satellite ephemeris and/or the common TA parameter(s) of the secondary cell(s) may be obtained.

In an embodiment, sending the first information includes:

in response to meeting a preset condition, sending a downlink message including the first information.

The preset condition may be determined based on whether the UE has a requirement for determining the transmission delay and/or the frequency offset of a cell.

Whether the preset condition is met may be determined by the base station, the core network, or the like.

For example, when the UE is covered by a secondary cell formed by the satellite, it is considered that the preset condition is met, and the downlink message including the first information may be sent to the UE.

In an embodiment, in response to meeting the preset condition, sending the downlink message including the first information includes at least one of the following:

in response to the UE being configured with at least one predetermined cell, sending the downlink message including the first information to the UE;

in response to a current radio access technology (RAT) type being the NTN, sending the downlink message including the first information;

in response to the predetermined cell being determined by the satellite, sending the downlink message including the first information;

in response to determining that the satellite of the predetermined cell is a non-geostationary orbiting (NGSO) satellite, sending the downlink message including the first information; or

in response to the UE switching between predetermined cells, sending the downlink message including the first information to the UE.

The first information may be carried by an information element (IE) of the downlink message. Or the first information may be carried in a predetermined field of some lEs. For example, the first information may be carried by an IE such as a serving cell common configuration (servingCellConfigcommon), and/or a serving cell configuration (servingCellConfig), and/or a common downlink configuration (DownlinkConfigCommon).

When the preset condition is met, the downlink message may carry the IE or the predetermined field carrying the first information. Otherwise, the downlink message may not carry the IE or the predetermined field carrying the first information.

Meeting the preset condition may include that the UE is configured with the predetermined cell, and/or the current RAT type is the NTN, and/or the predetermined cell is determined by the satellite, and/or it is determined that the satellite of the predetermined cell is the NGSO satellite, and/or the UE is handed over to the target cell. Here, the NGSO satellite may include a low earth orbit (LEO) satellite, and/or a medium earth orbit (MEO) satellite.

Here, determining the predetermined cell by the satellite means that the predetermined cell is formed based on the signal of the satellite. That is, the predetermined cell is a cell covered by the satellite signal.

For example, for the secondary cell, when an SCell is configured for the UE (such as Scell addition), and/or the current RAT type is the NTN, and/or the SCell is determined by the satellite, and/or it is determined that the satellite of the SCell is an NGSO satellite, the base station may carry the field carrying the first information in the IE such as servingCellConfigcommon, servingCellConfig, DownlinkConfigCommon, or the like.

For example, for the serving cell, when a serving cell is configured for the UE (such as the serving cell addition), and/or the current RAT type is the NTN, and/or the serving cell is determined by the satellite, and/or it is determined that the satellite of the serving cell is an NGSO satellite, the base station may carry the field carrying the first information in an IE such as DownlinkConfigCommon.

In this way, the first information is sent to the UE when the preset condition is met, so that a communication requirement of the UE in the cell generated by the satellite is met, and a communication reliability is improved. On the other hand, when the preset condition is not met, the first information may not be sent to the UE, so that signaling resources may be saved, and the case that the UE receives invalid information may be reduced.

In an embodiment, sending the first information includes: in response to there being an uplink channel configuration for the predetermined cell, sending the first information.

The transmission delay and/or the frequency offset determined by the UE based on the first information may be used for compensating for the uplink transmission.

Here, when an uplink channel resource is allocated to the secondary cell, the UE may perform the uplink transmission based on the configured uplink channel resource. When the UE performs the uplink transmission, the UE needs to determine the transmission delay and/or the frequency offset, to compensate for the uplink transmission and reduce the risk of the failure of the uplink transmission. Therefore, when there is the uplink channel configuration for the secondary cell, the access network device needs to send the first information to the UE, and the UE determines the transmission delay and/or the frequency offset to improve the transmission reliability.

The uplink channel configuration includes, but is not limited to, a configuration of a random access channel (RACH), a configuration of a physical uplink control channel (PUCCH), or the like.

In an embodiment, the first information is configured to update the satellite ephemeris and/or the common TA parameter(s)

For example, if the UE does not have the satellite ephemeris and/or the common TA parameter(s), the first information may be used for indicating the satellite ephemeris and/or the common TA parameter(s) to the UE. If the UE itself has satellite ephemeris and/or common TA parameter(s), then the first information may be used for updating the satellite ephemeris and/or the common TA parameter(s).

Due to a movement of the satellite along the orbit, the transmission delay and/or frequency offset between the satellite and the UE changes in real time. It is also possible that the running orbit of the satellite changes. Therefore, the access network device needs to update the satellite ephemeris and/or the common TA parameter(s) The access network device may send the first information to the UE, to update the satellite ephemeris and/or the common TA parameter(s)

In an embodiment, the first information is further configured to indicate a valid time of the satellite ephemeris, and/or a valid time of the common TA.

Due to the movement of the satellite along the orbit, the transmission delay and/or frequency offset between the satellite and the UE changes in real time. The running orbit of the satellite may also change. Thus, the satellite ephemeris and/or the common TA have a valid time. Here, the valid time of the common TA parameter(s) corresponds to the valid time of the common TA determined based on the common TA parameter(s) For example, the valid time of the common TA parameter(s) is the valid time of the common TA determined based on the common TA parameter(s). The UE compensates for the uplink transmission based on the satellite ephemeris and/or the common TA within the valid time, which may reduce the risk of uplink out-of-synchronization. If the UE compensates for the uplink transmission based on the satellite ephemeris and/or the common TA parameter(s) outside the valid time, the risk of uplink out-of-synchronization is increased, and there is a risk of communication failure.

Here, the first information may indicate the valid time by indicating a valid start time and a valid end time, or a valid start time and a valid time duration.

In an embodiment, the first information is configured to be used for updating the valid time of the satellite ephemeris and/or the valid time of the common TA parameter(s).

For example, if the UE does not have the valid time of the satellite ephemeris and/or the valid time of the common TA parameter(s), the first information may be used to indicate the valid time of the satellite ephemeris and/or the valid time of the common TA parameter(s) to the UE. If the UE itself has the valid time of satellite ephemeris and/or the valid time of the common TA parameter(s), the first information may be used to update the valid time of the satellite ephemeris and/or the valid time of the common TA parameter(s)

In this way, the UE may maintain the satellite ephemeris and/or the common TA within the valid time, therefore improving the communication reliability.

In an embodiment, sending the first information includes:
sending the first information within the valid time of the satellite ephemeris and/or the valid time of the common TA parameter(s) corresponding to the predetermined cell.

The access network device may send the first information within the valid time of the satellite ephemeris of the predetermined cell to update the satellite ephemeris, so as to reduce a state in which the UE has been in the uplink out-of-synchronization state due to the use of an invalid satellite ephemeris when sending the first information.

The access network device may send the first information within the valid time of the common TA of the predetermined cell to update the common TA parameter(s), so as to reduce a state in which the UE has been in the uplink out-of-synchronization state due to the use of an invalid common TA when sending the first information.

For example, the access network device may send the first information at a first moment to indicate the common TA parameter(s) to the UE, in which the first information may include the valid time of the common TA parameter(s). During the valid time of the common TA parameter(s), for example, at a second moment, the access network device may send the first information to update the common TA parameter(s) and/or the valid time of the common TA parameter(s) The second moment is after the first moment.

For example, the access network device may send the first information at a first moment to indicate the satellite ephemeris to the UE, in which the first information may include the valid time of the satellite ephemeris. During the valid time of the satellite ephemeris, for example, at the second moment, the access network device may send the first information to update the satellite ephemeris and/or the valid time of the satellite ephemeris. The second moment is after the first moment.

In an embodiment, sending the RRC message including the first information includes:
sending the RRC message including the first information based on an update requirement of the UE.

The RRC message including the first information may be a dedicated RRC signaling sent based on a request of the UE. The UE may send the request to the access network device based on a communication status and/or a mobility status of the UE.

Payload types in the NTN network may include a regenerative payload or a transparent payload. For the regenerative payload, the satellite has a capability of data processing and regeneration. For example, there is a base station located on the satellite or a gNB-DU located on the satellite. For the transparent payload, the satellite does not process a received signal and only completes a frequency conversion function and/or a signal amplification function. The processing and generation of a signal are completed by the base station and/or a ground station located on the ground. Cells generated by the satellite and the RAT type being NTN mentioned in the disclosure are all applicable to both the regenerative satellite and the transparent satellite.

As illustrated in FIG. 4, there is provided a method for transmitting information according to embodiments of the disclosure. The method may be applied to a UE. The method includes the following.

At step 401, first information is received. The first information is configured to indicate a satellite ephemeris and/or common TA parameter(s) corresponding to a predetermined cell, the common TA parameter(s) is/are configured to be used for the UE to determine a common TA of the predetermined cell, and the predetermined cell at least includes a secondary cell and/or a target cell for handover of the UE.

An access network device includes, but is not limited to, an NTN network access device, such as a satellite or a base station. The UE may be a mobile phone terminal that performs wireless communication using a cellular mobile communication network technology.

The method according to embodiments of the disclosure may be applied to, but is not limited to, an NTN cellular mobile communication system.

The ephemeris information of the satellite may be location and speed information of the satellite or may be a semi-major axis, an ascending node, an orbital inclination, and the like. The UE may determine a transmission delay and/or a frequency offset between the satellite and the UE based on the location and speed information of the satellite, a location of the UE, and the like.

The common TA may be the transmission delay from the satellite to a reference point. The UE may determine the transmission delay from the satellite to the reference point based on the common TA parameter(s). The reference point may be a base station or other known nodes located on the ground. The UE may determine the transmission delay between the satellite and the UE based on the common TA, its own location, and the location of the reference point.

The common TA parameter(s) may include: a common TA, a change rate of the common TA, and/or a second-order change rate of the common TA, etc. The UE may determine the common TA based on the common TA parameter(s).

The predetermined cell may be a cell formed by a coverage of a satellite signal in the NTN network. There may be one or more predetermined cells.

The predetermined cell may include a serving cell or a target cell for handover of the UE. The serving cell may include a primary cell and a secondary cell. The primary cell and the secondary cell may be generated by different satellites. The serving cell and the target cell may also be generated by different satellites.

The primary cell is a cell operating on a primary frequency of the UE, in which the UE performs an initial connection establishment procedure or initiates a connection re-establishment procedure, or a cell indicated as the primary cell in a handover procedure. The secondary cell is a cell operating on a secondary frequency of the UE, which may be configured once an RRC connection is established and which may be used to provide additional radio resources. As illustrated in FIG. 3, in a CA manner, the UE may be covered by signals of two satellites at the same time. The primary cell may be provided by one satellite, and the secondary cell may be provided by another satellite.

Based on the first information, the UE may obtain the ephemeris information and/or the common TA parameter(s) of the serving cell to determine a transmission delay and/or a frequency offset of the serving cell.

When switching to the target cell, the UE needs to determine the transmission delay and/or the frequency offset of the target cell. The base station may send the first information indicating ephemeris information and/or the common TA parameter(s) of the target cell to the UE by using the satellite. Based on the first information, the UE may obtain the ephemeris information and/or the common TA parameter(s) of the target cell to determine the transmission delay and/or the frequency offset of the target cell.

In this way, the access network device indicates the ephemeris information and/or the common TA parameter(s) of the predetermined cell to the UE by sending the first information, so that the UE may determine the transmission delay and/or the frequency offset of the predetermined cell, which meets the requirement that the UE determines the transmission delay and/or frequency offset of each cell in a multi-satellite cell coverage scenario, reduces the case of uplink out-of-synchronization of the UE, and improves a reliability of the UE performing wireless communication in the NTN network.

In an embodiment, receiving the first information includes:
receiving a RRC message including the first information.

The first information may be carried in the RRC message and sent to the UE. For example, the first information may be carried in a dedicated RRC message, such as an RRC reconfiguration message.

In an embodiment, the first information is for the predetermined cell.

For example, the first information may be for one predetermined cell. For example, the first information may be for a secondary cell. The UE may determine the satellite ephemeris and/or the common TA parameter(s) of the secondary cell based on the first information.

In an embodiment, the first information is for a cell group to which the predetermined cell belongs, in which cells in a same cell group are determined by a same satellite.

Here, the cell group may include, but is not limited to, a master cell group (MCG), a secondary cell group (SCG), or the like.

For example, the first information may be for the secondary cell group, and the UE may determine the satellite ephemeris and/or the common TA parameter(s) of each secondary cell in the secondary cell group based on the first information forthe secondary cell group. The secondary cells in the secondary cell group may belong to a same satellite. Therefore, each secondary cell may share the same satellite ephemeris and/or the same common TA parameter(s)

In an embodiment, the first information is for a timing advance group (TAG) to which the predetermined cell belongs, in which cells in the same TA group belong to the same satellite.

One TAG may include one or more cells, and TAs of the cells in one TAG may be the same. The TAG may include, but is not limited to, a secondary timing advance group (sTAG) consisting of secondary cells, a primary timing advance group (pTAG) consisting of primary cells, or the like.

For example, the TAG includes the secondary cell(s) of the UE, when the UE receives the first information for the TAG, the satellite ephemeris and/or the common TA parameter(s) of the secondary cell(s) may be obtained.

In an embodiment, the first information is sent by the access network device in response to meeting a preset condition.

The preset condition may be determined based on whether the UE has a requirement for determining the transmission delay and/or the frequency offset of a cell.

Whether the preset condition is met may be determined by the base station, the core network, or the like.

For example, when the UE is covered by one secondary cell formed by the satellite, it is considered that the preset condition is met, and the downlink message including the first information may be sent to the UE.

In an embodiment, in response to meeting the preset condition, sending the downlink message including the first information by the access network device includes at least one of the following:
in response to the UE being configured with at least one predetermined cell, sending the downlink message including the first information by the access network device to the UE;
in response to a current RAT type being the NTN, sending the downlink message including the first information by the access network device;
in response to the predetermined cell being determined by the satellite, sending the downlink message including the first information by the access network device;
in response to determining that the satellite of the predetermined cell is an NGSO satellite, sending the downlink message including the first information by the access network device; or
in response to the UE switching between predetermined cells, sending the downlink message including the first information by the access network device to the UE.

The first information may be carried by an IE of the downlink message. Or, the first information may be carried in a predetermined field of some lEs. For example, the first information may be carried by an IE such as servingCellConfigcommon, and/or servingCellConfig, and/or DownlinkConfigCommon.

When the preset condition is met, the downlink message may carry the IE or the predetermined field carrying the first information. Otherwise, the downlink message may not carry the IE or the predetermined field carrying the first information.

Meeting the preset condition may include that the UE is configured with the predetermined cell, and/or the current RAT type is the NTN, and/or the predetermined cell is determined by the satellite, and/or it is determined that the satellite of the predetermined cell is the NGSO satellite, and/or the UE is handed over to the target cell. Here, the NGSO satellite may include a low earth orbit (LEO) satellite, and/or a medium earth orbit (MEO) satellite.

Here, determining the predetermined cell by the satellite means that the predetermined cell is formed based on the signal of the satellite. That is, the predetermined cell is a cell covered by the satellite signal.

For example, forthe secondary cell, when an SCell is configured forthe UE (such as Scell addition), and/or the current RAT type is the NTN, and/or the SCell is determined by the satellite, and/or it is determined that the satellite of the SCell is an NGSO satellite, the base station may carry the field carrying the first information in the IE such as servingCellConfigcommon, servingCellConfig, DownlinkConfigCommon, or the like.

For example, for the serving cell, when a serving cell is configured for the UE (such as the serving cell addition), and/or the current RAT type is the NTN, and/or the serving cell is determined by the satellite, and/or it is determined that the satellite of the serving cell is an NGSO satellite, the base station may carry the field carrying the first information in an IE such as DownlinkConfigCommon.

In this way, the first information is sent to the UE when the preset condition is met, so that a communication requirement of the UE in the cell generated by the satellite is met, and a communication reliability is improved. On the other hand, when the preset condition is not met, the first information may not be sent to the UE, so that signaling resources may be saved, and the case that the UE receives invalid information may be reduced.

In an embodiment, the access network device sends the first information in response to there being an uplink channel configuration for the secondary cell.

The transmission delay and/or the frequency offset determined by the UE based on the first information may be used for compensating for the uplink transmission.

Here, when an uplink channel resource is allocated to the secondary cell, the UE may perform the uplink transmission based on the configured uplink channel resource. When the UE performs the uplink transmission, the UE needs to determine the transmission delay and/or the frequency offset, to compensate for the uplink transmission and reduce the risk of the failure of the uplink transmission. Therefore, when there is the uplink channel configuration for the secondary cell, the access network device needs to send the first information to the UE, and the UE determines the transmission delay and/or the frequency offset to improve the transmission reliability.

The uplink channel configuration includes, but is not limited to, a configuration of an RACH, a configuration of a PUCCH, or the like.

In an embodiment, the first information is configured to update the satellite ephemeris and/or the common TA parameter(s)

For example, if the UE does not have the satellite ephemeris and/or the common TA parameter(s), the first information may be used for indicating the satellite ephemeris and/or the common TA parameter(s) to the UE. If the UE itself has satellite ephemeris and/or common TA parameter(s), then the first information may be used to update the satellite ephemeris and/or the common TA parameter(s).

Due to the movement of the satellite along the orbit, the transmission delay and/or the frequency offset between the satellite and the UE changes in real time. It is also possible that the running orbit of the satellite changes. Therefore, the access network device needs to update the satellite ephemeris and/or the common TA parameter(s) The access network device may send the first information to the UE, to update the satellite ephemeris and/or the common TA parameter(s).

In an embodiment, the first information is further configured to indicate a valid time of the satellite ephemeris, and/or a valid time of the common TA parameter(s)

Due to the movement of the satellite along the orbit, the transmission delay and/or the frequency offset between the satellite and the UE changes in real time. The running orbit of the satellite may also change. Thus, the satellite ephemeris and/or the common TA have a valid time. Here, the valid time of the common TA parameter(s) corresponds to the valid time of the common TA determined based on the common TA parameter(s) For example, the valid time of the common TA parameter(s) is the valid time of the common TA determined based on the common TA parameter(s). The UE compensates for the uplink transmission based on the satellite ephemeris and/or the common TA within the valid time, which may reduce the risk of uplink out-of-synchronization. If the UE compensates for the uplink transmission based on the satellite ephemeris and/or the common TA outside the valid time, the risk of uplink out-of-synchronization is increased, and there is a risk of communication failure.

Here, the first information may indicate the valid time by indicating a valid start time and a valid end time, or a valid start time and a valid time duration.

In an embodiment, the first information is configured to be used for updating the valid time of the satellite ephemeris and/or the valid time of the common TA parameter(s).

For example, if the UE does not have the valid time of the satellite ephemeris and/or the valid time of the common TA parameter(s), the first information may be used to indicate the valid time of the satellite ephemeris and/or the valid time of the common TA parameter(s) to the UE. If the UE itself has the valid time of satellite ephemeris and/or the valid time for the common TA parameter(s), the first information may be used to update the valid time of the satellite ephemeris and/or the valid time of the common TA parameter(s)

In this way, the UE may maintain the satellite ephemeris and/or the common TA within the valid time, therefore improving the communication reliability.

In an embodiment, receiving the first information includes:
receiving the first information within the valid time of the satellite ephemeris and/or the valid time of the common TA parameter(s) corresponding to the predetermined cell.

The access network device may send the first information within the valid time of the satellite ephemeris of the predetermined cell to update the satellite ephemeris, so as to reduce a state in which the UE has been in the uplink out-of-synchronization state due to the use of an invalid satellite ephemeris when sending the first information.

The access network device may send the first information within the valid time of the common TA of the predetermined cell to update the common TA parameter(s), so as to reduce a state in which the UE has been in the uplink out-of-synchronization state due to the use of an invalid common TA when sending the first information.

For example, the access network device may send the first information at a first moment to indicate the common TA parameter(s) to the UE, in which the first information may include the valid time of the common TA parameter(s). During the valid time of the common TA parameter(s), for example, at a second moment, the access network device may send the first information to update the common TA parameter(s) and/or the valid time of the common TA parameter(s) The second moment is after the first moment.

For example, the access network device may send the first information at a first moment to indicate the satellite ephemeris to the UE, in which the first information may include the valid time of the satellite ephemeris. During the valid time of the satellite ephemeris, for example, at the second moment, the access network device may send the first information to update the satellite ephemeris and/or the valid time of the satellite ephemeris. The second moment is after the first moment.

In an embodiment, receiving the RRC message including first information includes:
receiving the RRC message including the first information based on an update requirement of the UE.

The RRC message including the first information may be a dedicated RRC signaling sent based on a request of the UE. The UE may send the request to the access network device based on a communication status and/or a mobility status of the UE.

Payload types in the NTN network may include a regenerative payload type and a transparent payload type. For the former, the satellite has a capability of data processing and regeneration. For example, there is a base station located on the satellite or a gNB-DU located on the satellite. For the latter, the satellite does not process a received signal and only completes a frequency conversion function and/or a signal amplification function, and the processing and generation of a signal are completed by the base station and/or a ground station located on the ground. Cells generated by the satellite and the RAT type being NTN mentioned in the disclosure are all applicable to both the regenerative satellite and the transparent satellite.

A specific example is provided below in conjunction with any of the above embodiments.
1. the satellite ephemeris and/or the common TA parameter(s) may be configured per cell/per cell group/per TA group.
2. the satellite ephemeris and/or the common TA parameter(s) may be configured for a secondary cell.

For the secondary cell, if the satellite ephemeris and/or the common TA parameter(s) are included in some IEs, these lEs/fields may appear when a secondary cell is added (such as scell addition). The lEs may include: servingCellConfigcommon, servingCellConfig, DownlinkConfigCommon, or the like. These lEs/fields may also appear when the RAT type is the NTN, or a serving cell type is a satellite serving cell, or the satellite is an LEO.

For the serving cell, regardless of a PSCell or a SCell, when the satellite ephemeris and/or Common TA parameter(s) are included in a certain IEs, this lE/field may appear when a serving cell is added (such as serving cell addition). The IE may include: DownlinkConfigCommon. This IE/field may also appear when the RAT type is the NTN, or the serving cell type is a satellite serving cell, or the satellite is an LEO.

3. The SCell at least includes an uplink channel configuration, such as a RACH, a PUCCH, or the like.

4. The satellite ephemeris and/or the common TA parameter(s) of the secondary cell may be carried in a UE-specific RRC message.

5. The UE may receive an update of the satellite ephemeris and/or the common TA parameter(s) within a validity timer of the satellite ephemeris and/or a validity timer of the common TA parameter(s) The satellite ephemeris and/or the common TA parameter(s) may be updated by using a dedicated RRC message sent based on a requirement of the UE.

Example 1, the satellite ephemeris and/or the common TA parameter(s) of the serving cell are transmitted in ServingCellConfigCommon.

The IE ServingCellConfigCommon is used to configure cell specific parameters for a UE's serving cell. The IE contains parameters which a UE would typically acquire from SSB, MIB or SIBs when accessing the cell from IDLE. With this IE, the network provides certain parameters in dedicated signaling when configuring a UE with an SCell or with an additional cell group (SCG). It also provides it for SpCells (MCG and SCG) upon reconfiguration with sync.

For example, in the IE ServingCellConfigCommon, the following signaling format may be used to carry the satellite ephemeris and/or the common TA parameter(s): 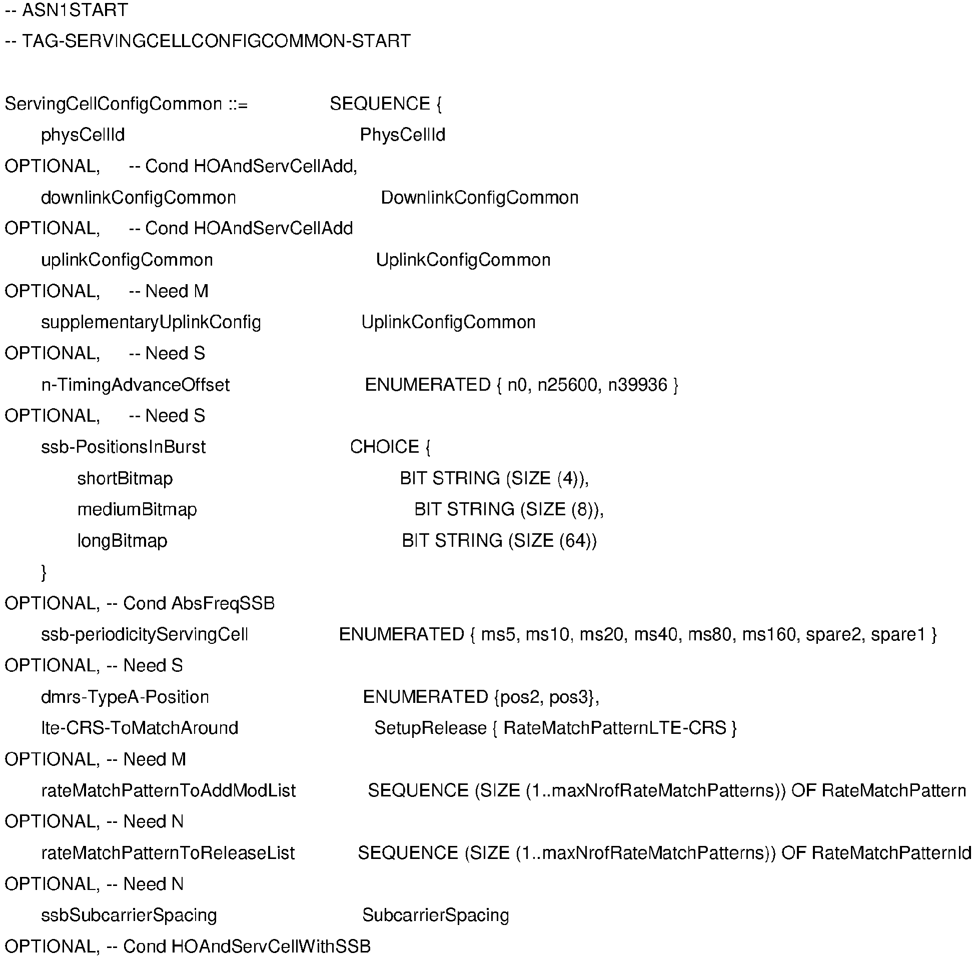 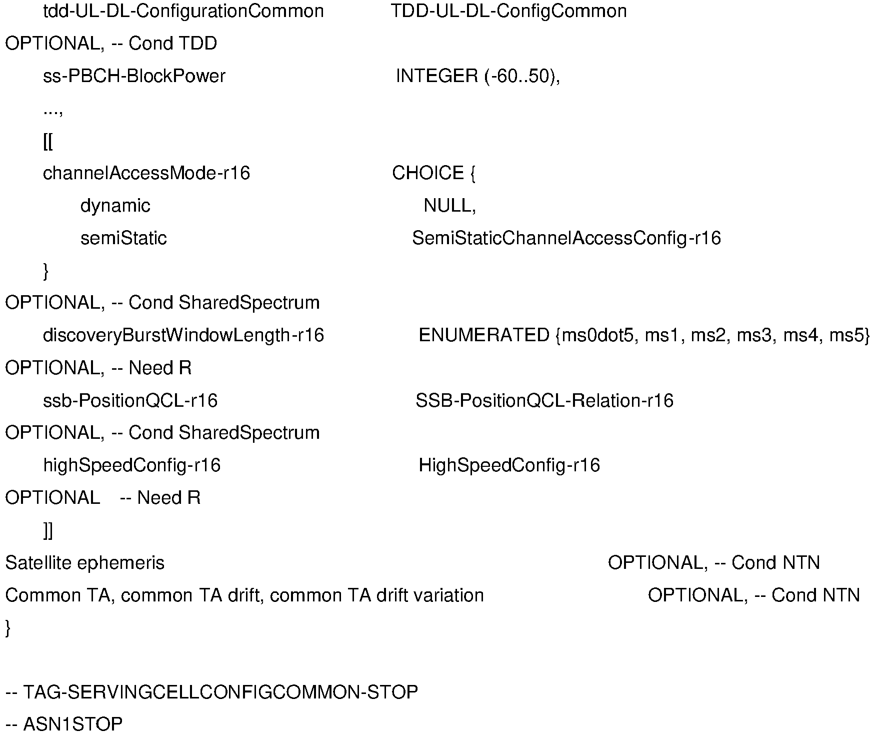 where, Satellite ephemeris represents the satellite ephemeris. OPTIONAL, -- Cond NTN represents: when the RAT type is the NTN, Satellite ephemeris appears in ServingCellConfigCommon.

The base station may configure ServingCellConfigCommon for each cell.

When the cell is a SCell, the satellite ephemeris and/or the common TA parameter(s) in ServingCellConfigCommon may appear when a secondary cell is added (such as the scell addition), or may appear when the satellite ephemeris and/or the common TA parameter(s) of the sCell is updated.

Example 2, the satellite ephemeris and/or the common TA parameter(s) of the serving cell are included in DownlinkConfigCommon, and may also exist when the satellite ephemeris needs to be updated.

For example, in IE DownlinkConfigCommon, the following signaling format may be used to carry the satellite ephemeris and/or the common TA parameter(s): 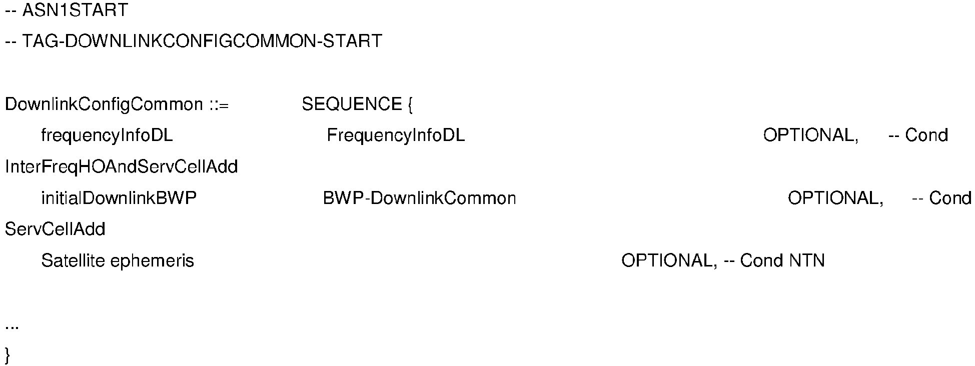 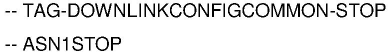 where, Satellite ephemeris represents the satellite ephemeris. OPTIONAL, -- Cond NTN represents: when the RAT type is the NTN, Satellite ephemeris appears in DownlinkConfigCommon.

When the IE DownlinkConfigCommon appears in another IE as a field, for example, when the IE DownlinkConfigCommon appears in ServingCellConfigCommon, its appearance condition may include: handover (HO) and a serving cell addition, and the signaling format is as follows: 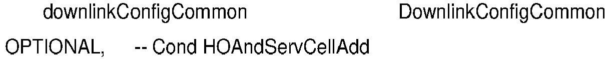 where, OPTIONAL, -- Cond HOAndServCellAdd represents that when the HO and a serving cell addition are performed, DownlinkConfigCommon appears.

Example 3, in IE UplinkConfigCommon, the following signaling format may be used to carry the satellite ephemeris and/or the common TA parameter(s): 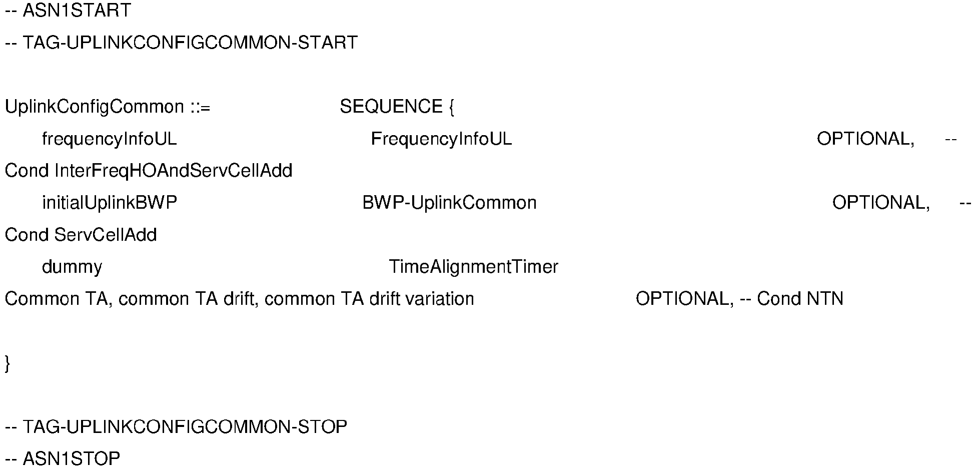 where, *Common TA, Common TA drift* and *Common TA drift variation* represent different common TA parameters. OPTIONAL, -- Cond NTN represents that when the RAT type is NTN, the common TA parameter(s) appears in UplinkConfigCommon.

Example 4, the satellite ephemeris and/or the common TA parameter(s) of the serving cell are contained in ServingCellConfig for transmission.

The IE ServingCellConfig is used to configure (add or modify) the UE with a serving cell, which may be the SpCell or an SCell of an MCG or SCG. The parameters herein are mostly UE specific but partly also cell specific (e.g., in additionally configured bandwidth parts). Reconfiguration between a PUCCH and PUCCHless SCell is only supported using an SCell release and add.

In the IE ServingCellConfig, the following signaling format may be used to carry the satellite ephemeris and/or the common TA parameter(s): 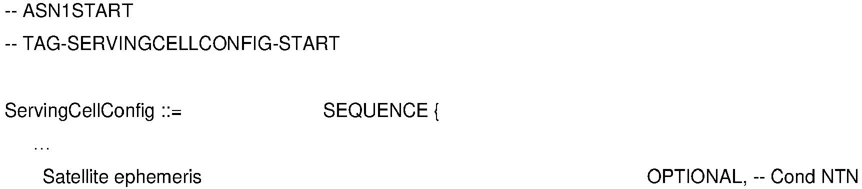 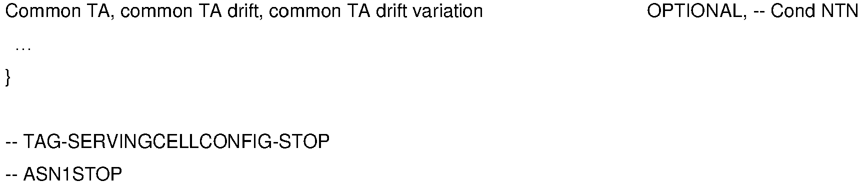 where, *Common TA, Common TA drift* and *Common TA drift variation* represent different common TA parameters. OPTIONAL, -- Cond NTN represents that when the RAT type is NTN, the common TA parameter(s) appears in the ServingCellConfig.

The satellite ephemeris and/or the common TA parameter(s) in the ServingCellConfig may appear when a secondary cell is added (such as the scell addition), or may appear when the satellite ephemeris and/or the common TA parameter(s) of the SCell are updated.

Embodiments of the disclosure further provide an apparatus for transmitting information, which is applied to an access network device in the cellular mobile wireless communication. As illustrated in FIG. 5, the apparatus 100 includes a sending module 110.

The sending module 110 is configured to send first information, in which the first information is configured to indicate a satellite ephemeris and/or a common TA parameter(s) corresponding to a predetermined cell, the common TA parameter(s) is configured to be used for a UE to determine a common TA of the predetermined cell, and the predetermined cell at least includes: a secondary cell and/or a target cell for handover of the UE.

In an embodiment, the first information is for the predetermined cell;
or,
the first information is for a cell group to which the predetermined cell belongs, in which cells in a same cell group are determined by a same satellite;
   or,
the first information is for a TA group to which the predetermined cell belongs, in which cells in a same TA group are determined by a same satellite.

In an embodiment, the sending module 110 is configured to:
in response to meeting a preset condition, send a downlink message including the first information.

In an embodiment, the sending module 110 is configured to perform at least one of the following:
in response to the UE being configured with at least one predetermined cell, sending the downlink message including the first information to the UE;
in response to a current RAT type being the NTN, sending the downlink message including the first information;
in response to the predetermined cell being determined by the satellite, sending the downlink message including the first information;
in response to determining that the satellite of the predetermined cell is an NGSO satellite, sending the downlink message including the first information; or
in response to the UE switching between predetermined cells, sending the downlink message including the first information to the UE.

In an embodiment, the sending module 110 is configured to:
in response to there being an uplink channel configuration for the predetermined cell, send the first information.

In an embodiment, the first information is further configured to indicate a valid time of the satellite ephemeris, and/or a valid time of the common TA.

In an embodiment, the sending module 110 is configured to:
send the first information within the valid time of the satellite ephemeris and/orthe valid time of the common TA parameter(s) corresponding to the predetermined cell.

In an embodiment, the sending module 110 is configured to:
send an RRC message including the first information.

In an embodiment, the sending module 110 is configured to:
send the RRC message including the first information based on an update requirement of the UE.

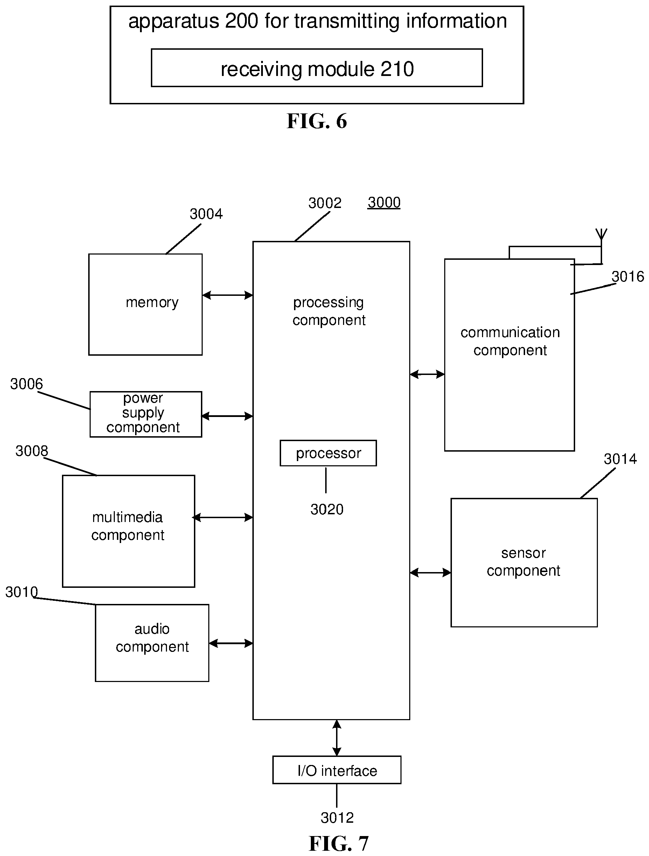

Embodiments of the disclosure further provide an apparatus for transmitting information, which is applied to a UE in the cellular mobile wireless communication. As illustrated in FIG. 6, the apparatus 200 includes a receiving module 210.

The receiving module 210 is configured to receive first information, in which the first information is configured to indicate a satellite ephemeris and/or common TA parameter(s) corresponding to a predetermined cell, the common TA parameter(s) is/are configured to be used for a UE to determine a common TA of the predetermined cell, and the predetermined cell at least includes: a secondary cell and/or a target cell for handover of the UE.

In an embodiment, the first information is for the predetermined cell;
or,
the first information is for a cell group to which the predetermined cell belongs, in which cells in a same cell group are determined by a same satellite;
   or,
the first information is for a TA group to which the predetermined cell belongs, in which cells in a same TA group are determined by a same satellite.

In an embodiment, the first information is further configured to indicate a valid time of the satellite ephemeris, and/or a valid time of the common TA parameter(s)

In an embodiment, the receiving module 210 is configured to:
receive the first information within the valid time of the satellite ephemeris and/or the valid time of the common TA parameter(s) corresponding to the predetermined cell.

In an embodiment, the receiving module 210 is configured to:
receive an RRC message including the first information.

In an embodiment, the receiving module 210 is configured to:
receive the RRC message including the first information based on an update requirement of the UE.

In some embodiments, the sending module 110 and the receiving module 210 may be implemented by one or more central processing unit (CPU), graphics processing unit (GPU), baseband processor (BP), application specific integrated circuit (ASIC), DSP, programmable logic device (PLD), complex programmable logic device (CPLD), field-programmable gate array (FPGA), general-purpose processor, controller, micro controller unit (MCU), microprocessor, or other electronic components, to perform the aforementioned methods.

FIG. 7 is a block diagram illustrating a device 3000 for transmitting information according to an embodiment. For example, the device 3000 may be a mobile phone, a computer, a digital broadcasting terminal, a messaging device, a game console, a tablet device, a medical equipment, a fitness equipment, a personal digital assistant, or the like.

As illustrated in FIG. 7, the device 3000 may include one or more components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the whole operation of the device 3000, such as the operations related to display, phone call, data communication, camera operation and recording operation. The processing component 3002 may include one or more processors 3020 to perform instructions, to complete all or part of steps of the above methods. In addition, the processing component 3002 may include one or more modules for the convenience of interaction between the processing component 3002 and other components. For example, the processing component 3002 may include a multimedia module for the convenience of interaction between the multimedia component 3008 and the processing component 3002.

The memory 3004 is configured to store all types of data to support the operations of the device 3000. Examples of the data include the instructions of any applications or methods operated on the device 3000, contact data, phone book data, messages, pictures, videos, etc. The memory 3004 may be implemented by any type of volatile or nonvolatile storage devices or their combination, such as a stationary random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 3006 may provide power supply for all components of the device 3000. The power supply component 3006 may include power supply management system, one or more power supplies, and other units related to generating, managing and distributing power for the device 3000.

The multimedia component 3008 includes an output interface screen provided between the device 3000 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touching, sliding and gestures on the touch panel. The touch sensor may not only sense the boundary of touch or slide action, but also detect the duration and pressure related to the touching or sliding operation. In some embodiments, the multimedia component 3008 includes a front-facing camera and/or a rear-facing camera. When the device 3000 is in operation mode, such as shooting mode or video mode, the front-facing camera or the rear-facing camera may receive the external multimedia data. Each front-facing camera and rear-facing camera may be a fixed optical lens system or an optical lens system with focal length and optical zoom capacity.

The audio component 3010 is configured as an output and/or input signal. For example, the audio component 3010 includes a microphone (MIC). When the device 3000 is in operation mode, such as call mode, record mode, and speech recognition mode, the microphone is configured to receive the external audio signals. The audio signals received may be further stored in the memory 3004 or sent via the communication component 3016. In some embodiments, the audio component 3010 further includes a speaker configured to output an audio signal.

The I/O interface 3012 provides an interface for the processing component 3002 and the peripheral interface module, and the peripheral interface module may be a keyboard, a click wheel, a button, etc. The buttons may include but not limited to a home button, a volume button, a start button and a lock button.

The sensor component 3014 includes one or more sensors, configured to provide various aspects of status assessment for the device 3000. For example, the sensor component 3014 may detect the on/off state of the device 3000 and the relative positioning of the component, such as a display and a keypad of the device 3000. The sensor component 3014 may further detect the location change of the device 3000 or a component of the device 3000, the presence or absence of contact between the user and the device 3000, the orientation or acceleration/deceleration of the device 3000, and the temperature change of the device 3000. The sensor component 3014 may include a proximity sensor, which is configured to detect the existence of the objects nearby without any physical contact. The sensor component 3014 may further include a light sensor such as CMOS or CCD image sensor, which is configured to use in imaging applications. In some embodiments, the sensor component 3014 may further include an acceleration transducer, a gyroscope sensor, a magnetic sensor, a pressure sensor or a temperature sensor.

The communication component 3016 is configured for the convenience of wire or wireless communication between the device 3000 and other devices. The device 3000 may access wireless networks based on communication standard, such as WiFi, 2G or 3G, or their combination. In an embodiment, the communication component 3016 receives broadcast signals or broadcast-related information from an external broadcast management system via a broadcast channel. In an embodiment, the communication component 3016 further includes a near field communication (NFC) module to facilitate short-range communication. For example, an NFC module may be implemented based on radio frequency identification (RFID) technology, infrared data association (IRDA) technology, ultra-wideband (UWB) technology, Bluetooth (BT) technology and other technologies.

In an embodiment, the device 3000 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an embodiment, a non-temporary computer readable storage medium having instructions is further provided, such as the memory 3004 including instructions. The instructions may be executed by the processor 3020 of the device 3000 to complete the above methods. For example, the non-transitory computer readable storage medium may be a ROM, a random access memory (RAM), a CD-ROM, a magnetic tape, a floppy disk, an optical data storage device, etc.

After considering the specification and practicing the disclosure herein, those skilled in the art will easily think of other implementations in embodiments of the disclosure. The application is intended to cover any variations, usages, or adaptive changes of embodiments of the disclosure. These variations, usages, or adaptive changes follow the general principles of embodiments of the disclosure and include common knowledge or conventional technical means in the technical field not disclosed in embodiments of the disclosure. The description and the embodiments are to be regarded as exemplary only, and the true scope and spirit of embodiments of the disclosure are given by the appended claims.

It is understandable that the disclosure is not limited to the precise structure described above and shown in the drawings, and various modifications and changes may be made without departing from its scope. The scope of the disclosure is only limited by the appended claims.

## Claims

1. A method for transmitting information, applied to an access network device, comprising:
sending first information, wherein the first information is configured to indicate a satellite ephemeris and/or common timing advance (TA) parameter(s) corresponding to a predetermined cell, the common TA parameter(s) is/are configured to be used for a user equipment (UE) to determine a common TA of the predetermined cell, and the predetermined cell at least comprises: a secondary cell and/or a target cell for handover of the UE.

2. The method of claim 1, wherein,
the first information is for the predetermined cell;
or,
the first information is for a cell group to which the predetermined cell belongs, wherein cells in a same cell group are determined by a same satellite;
or,
the first information is for a TA group to which the predetermined cell belongs, wherein cells in a same TA group are determined by a same satellite.

3. The method of claim 1, wherein sending the first information comprises:
sending a downlink message comprising the first information in response to meeting a preset condition.

4. The method of claim 3, wherein sending the downlink message comprising the first information in response to meeting the preset condition comprises at least one of:
sending the downlink message comprising the first information to the UE in response to the UE being configured with at least one predetermined cell;
sending the downlink message comprising the first information in response to a current radio access technology (RAT) type being non-terrestrial networks (NTN);
sending the downlink message comprising the first information in response to the predetermined cell being determined by a satellite;
sending the downlink message comprising the first information in response to determining that a satellite of the predetermined cell is a non-geostationary orbit (NGSO) satellite; or
sending the downlink message comprising the first information to the UE in response to the UE switching between predetermined cells.

5. The method of claim 1, wherein sending the first information comprises:
sending the first information in response to there being an uplink channel configuration for the predetermined cell.

6. The method of claim 1, wherein,
the first information is further configured to indicate a valid time of the satellite ephemeris and/or a valid time of the common TA.

7. The method of claim 1, wherein sending the first information comprises:
sending the first information within a valid time of the satellite ephemeris and/or a valid time of the common TA parameter(s) corresponding to the predetermined cell.

8. The method of any one of claims 1 to 7, wherein sending the first information comprises:
sending a radio resource control (RRC) message comprising the first information.

9. The method of claim 8, wherein sending the RRC message comprising the first information comprises:
sending the RRC message comprising the first information based on an update requirement of the UE.

10. A method for transmitting information, applied to a user equipment (UE), comprising:
receiving first information, wherein the first information is configured to indicate a satellite ephemeris and/or common timing advance (TA) parameter(s) corresponding to a predetermined cell, the common TA parameter(s) is/are configured to be used for the UE to determine a common TA of the predetermined cell, and the predetermined cell at least comprises: a secondary cell and/or a target cell for handover of the UE.

11. The method of claim 10, wherein,
the first information is for the predetermined cell;
or,
the first information is for a cell group to which the predetermined cell belongs, wherein cells in a same cell group are determined by a same satellite;
or,
the first information is for a TA group to which the predetermined cell belongs, wherein cells in a same TA group are determined by a same satellite.

12. The method of claim 10, wherein,
the first information is further configured to indicate a valid time of the satellite ephemeris and/or a valid time of the common TA parameter(s)

13. The method of claim 10, wherein receiving the first information comprises:
receiving the first information within a valid time of the satellite ephemeris and/or a valid time of the common TA parameter(s) corresponding to the predetermined cell.

14. The method of any one of claims 10 to 13, wherein receiving the first information comprises:
receiving a radio resource control (RRC) message comprising the first information.

15. The method of claim 14, wherein receiving the RRC message comprising the first information comprises:
receiving the RRC message comprising the first information based on an update requirement of the UE.

16. An apparatus for transmitting information, applied to an access network device, comprising:
a sending module, configured to send first information, wherein the first information is configured to indicate a satellite ephemeris and/or common timing advance (TA) parameter(s) corresponding to a predetermined cell, the common TA parameter(s) is/are configured to be used for a user equipment (UE) to determine a common TA of the predetermined cell; and the predetermined cell at least comprises: a secondary cell and/or a target cell for handover of the UE.

17. The apparatus of claim 16, wherein,
the first information is for the predetermined cell;
or,
the first information is for a cell group to which the predetermined cell belongs, wherein cells in a same cell group are determined by a same satellite;
or,
the first information is for a TA group to which the predetermined cell belongs, wherein cells in a same TA group are determined by a same satellite.

18. The apparatus of claim 16, wherein the sending module is configured to:
send a downlink message comprising the first information in response to meeting a preset condition.

19. The apparatus of claim 18, wherein the sending module is configured to perform at least one of:
sending the downlink message comprising the first information to the UE in response to the UE being configured with at least one predetermined cell;
sending the downlink message comprising the first information in response to a current radio access technology (RAT) type being non-terrestrial networks (NTN);
sending the downlink message comprising the first information in response to the predetermined cell being determined by a satellite;
sending the downlink message comprising the first information in response to determining that a satellite of the predetermined cell is a non-geostationary orbit (NGSO) satellite; or
sending the downlink message comprising the first information to the UE in response to the UE switching between predetermined cells.

20. The apparatus of claim 16, wherein the sending module is configured to:
send the first information in response to there being an uplink channel configuration for the predetermined cell.

21. The apparatus of claim 16, wherein,
the first information is further configured to indicate a valid time of the satellite ephemeris and/or a valid time of the common TA.

22. The apparatus of claim 16, wherein the sending module is configured to:
send the first information within a valid time of the satellite ephemeris and/or a valid time of the common TA parameter(s) corresponding to the predetermined cell.

23. The apparatus of any one of claim 16 to 22, wherein the sending module is configured to:
send a radio resource control (RRC) message comprising the first information.

24. The apparatus of claim 23, wherein the sending module is configured to:
send the RRC message comprising the first information based on an update requirement of the UE.

25. An apparatus for transmitting information, applied to a user equipment (UE), comprising:
a receiving module, configured to receive first information, wherein the first information is configured to indicate a satellite ephemeris and/or common timing advance (TA) parameter(s) corresponding to a predetermined cell, the common TA parameter(s) is/are configured to be used for the UE to determine a common TA of the predetermined cell, and the predetermined cell at least comprises: a secondary cell and/or a target cell for handover of the UE.

26. The apparatus of claim 25, wherein,
the first information is for the predetermined cell;
or,
the first information is for a cell group to which the predetermined cell belongs, wherein cells in a same cell group are determined by a same satellite;
or,
the first information is for a TA group to which the predetermined cell belongs, wherein cells in a same TA group are determined by a same satellite.

27. The apparatus of claim 25, wherein,
the first information is further configured to indicate a valid time of the satellite ephemeris and/or a valid time of the common TA parameter(s)

28. The apparatus of claim 25, wherein the receiving module is configured to:
receive the first information within a valid time of the satellite ephemeris and/or a valid time of the common TA parameter(s) corresponding to the predetermined cell.

29. The apparatus of any one of claim 25 to 28, wherein the receiving module is configured to:
receive a radio resource control (RRC) message comprising the first information.

30. The apparatus of claim 29, wherein the receiving module is configured to:
receive the RRC message comprising the first information based on an update requirement of the UE.

31. A communication device, comprising a processor, a memory and an executable program stored in the memory, wherein when the processor executes the executable program, steps of the method for transmitting information of any one of claims 1 to 9 or claims 10 to 15 are performed.

32. A storage medium with an executable program stored thereon, wherein the program causes a processor to perform the steps of the methods for transmitting information of any one of claims 1 to 9 or claims 10 to 15 when executed by the processor.
